# EUROPÄISCHE PATENTSCHRIFT

(11) **EP 3 251 931 B1**
(45) Veröffentlichungstag und Bekanntmachung des Hinweises auf die Patenterteilung: **30.10.2019**
(21) Anmeldenummer: 17174178.8
(22) Anmeldetag: 02.06.2017
(51) Int. Cl.: B62K 5/06, B62K 7/00, B62K 21/00, B62K 21/10, B62K 5/08, B62K 5/10, B62K 5/05

(54) **FAHRGESTELL FÜR EIN DREIRÄDRIGES FAHRZEUG UND DREIRÄDRIGES FAHRZEUG, INSBESONDERE LASTENFAHRRAD**
CHASSIS FOR A THREE-WHEELED VEHICLE AND THREE-WHEELED VEHICLE, IN PARTICULAR LOAD-CARRYING BICYCLE
CADRE POUR UN TRICYCLE ET TRICYCLE, EN PARTICULIER TRIPORTEUR

(30) Priorität: 03.06.2016 DE 102016110346
(43) Veröffentlichungstag der Anmeldung: 06.12.2017
(73) Patentinhaber: sblocs bikes GmbH, 12161 Berlin (DE)
(72) Erfinder: Türck, Harald, 85716 Unterschleissheim (DE); Dittberner, Marcus, 12161 Berlin (DE)
(74) Vertreter: Schulz Junghans Patentanwälte PartGmbB

(56) Entgegenhaltungen:
- EP-A1- 1 690 782
- WO-A1-2015/067760
- DE-A1- 4 424 302
- FR-A1- 2 964 937

## Beschreibung

Die Erfindung betrifft ein Fahrgestell für ein dreirädriges Fahrzeug und ein dreirädriges Fahrzeug, insbesondere ein Lastenfahrrad.

Lastenfahrräder werden in zunehmendem Maße eingesetzt, um Güter zu transportieren, ohne dabei auf Kraftfahrzeuge angewiesen zu sein. Insbesondere im städtischen Bereich, wo vergleichsweise kurze Strecken zu überwinden sind und Flexibilität und Wendigkeit gefragt sind, kommen Lastenfahrräder häufig zum Einsatz. Sie stellen eine umweltbewusste und kostengünstige Alternative zu Kraftfahrzeugen dar.

Durch die Anordnung von Transportkörben, -schalen oder Ähnlichem können so auch schwere und/ oder sperrige Gegenstände befördert werden. Auch der Transport von Kindern ist mit entsprechend ausgestatteten Lastenfahrrädern, beispielweise mit einem Transportkorb mit darin befestigten Kindersitzen, möglich.

Eine häufige Bauweise ist die eines dreirädrigen Lastenfahrrades mit vorn angeordnetem Transportkorb. Diese Konstruktion ermöglicht im Vergleich zu Zweirädern mit einem zwischen Vorderrad und Lenker angeordneten Transportkorb ein großes Transportvolumen bei relativ kurzer Gesamtlänge. Dabei kann der Korb entweder starr mit dem Rahmen verbunden sein oder bei Lenkbewegungen mitschwenken. Das Volumen und die Form des Transportbehälters hängen dabei stark von der Konstruktionsweise von Lenkung und Transportkorb ab. Diese hat wiederum einen wesentlichen Einfluss auf die Fahreigenschaften des Fahrrads.

Die DE 10 2004 042 844 A1 offenbart ein Lastenfahrrad, bei dem ein Vorderteil des Rahmenrohres niedrig vorgesehen ist und sich bis unterhalb der Lasteneinheit erstreckt. Der gesamte Vorderbau ist drehbar und umfasst die beiden Vorderräder. Die Lenkachse liegt in Fahrtrichtung vorder Drehachse der Vorderräder.

Die WO 2015/ 067 760 A1 offenbart einen Neigemechanismus für beispielweise dreirädrige Fahrräder wie Lastenfahrräder, dem eine Parallelogrammstruktur zugrunde liegt. Die Vorderräder verfügen dabei über einzelne Lenkachsen, die vorzugsweise schräggestellt sind, um eine Rückstellkraft in die Geradeauslage zu erzeugen.

Die FR 2 964 937 offenbart ein Fahrgestell für ein dreirädiges Fahrzeug gemäß dem Oberbegriff des Anspruchs 1.

Die herkömmlichen Lösungen sind nicht in der Lage, eine einfache und komfortable Bedienbarkeit bei maximalem Laderaum und dabei geringer Breite und eine kostengünstige und robuste Konstruktion bei langer Lebensdauer zu erreichen.

Der Erfindung liegt die Aufgabe zugrunde, ein einfaches, robustes und kostengünstiges Fahrgestell sowie ein derartiges Lastenfahrrad zur Verfügung zu stellen, deren Bedienbarkeit bei großem Ladevolumen einfach und komfortabel ist.

Die Aufgabe wird gelöst durch ein Fahrgestell gemäß Anspruch 1 sowie ein Fahrzeug gemäß Anspruch 9. Vorteilhafte Ausgestaltungen des Fahrgestells sind in den Unteransprüchen 2 bis 8 angegeben. Eine vorteilhafte Ausgestaltung des Fahrzeugs ist in Unteranspruch 10 angegeben.

Ein erster Aspekt der Erfindung ist ein Fahrgestell für ein dreirädriges Fahrrad, welches ein Drehgelenk und ein daran um eine Drehachse drehbar angeordnetes Drehgestell umfasst, auf dem ein Behälter derart angeordnet oder anordbar ist, dass er sich bei einer Lenkbewegung mit dem Drehgestell mitdreht. Das Fahrgestell weist weiterhin ein Lenkgetriebe auf, mit welchem eine Lenkbewegung eines Lenkers auf das Drehgestell übertragbar ist.

Dabei weist das Fahrgestell wenigstens zwei Vorderradaufnahmeeinrichtungen zur Aufnahme einer jeweiligen Achse des Vorderrades und zur Positionierung der jeweiligen Achse in Bezug zum Fahrgestell auf. Die Drehachse verläuft in einer Fahrtrichtung eines Fahrrades, das das Fahrgestell aufweist, vor den Vorderradaufnahmeeinrichtungen.

Das heißt, dass die Drehachse des Drehgestells in Fahrtrichtung entlang der x-Achse (wie auf Seite 4 definiert) in der Höhe der Vorderradaufnahmeeinrichtungen vor der Achse der Vorderräder angeordnet ist. Dadurch ergibt sich eine Nachlaufstrecke. Der Spurpunkt, also der Punkt, an dem die Drehachse des Drehgestells die Fahrbahnfläche schneidet, liegt vor dem Radaufstandspunkt. Bei Lenkbewegung wird somit ein zusätzliches Rückstellmoment erzeugt, das der Lenkbewegung entgegengesetzt wirkt und hilft, die Vorderräder wieder in die Geradestellung zurück zu bewegen. Damit ergibt sich eine weitere Stabilisierung der Geradeausfahrt.

Vorzugsweise sind am Fahrgestell Räder, insbesondere zwei Vorderräder und ein Hinterrad, sowie ein Lenker anordbar. Dabei weisen die Vorderräder eine gemeinsame Drehachse oder einzelne Drehachsen auf. Sind je Vorderrad einzelne Drehachsen vorhanden, liegen diese während eines Lenkvorganges in der Draufsicht auf einer gemeinsamen Gerade. Mit anderen Worten ergibt sich eine gemeinsame, starre Lenkachse für beide Räder.

Die Lenkung eines Drehgestells um die vordere Achse wird als Drehschemellenkung bezeichnet. Am Drehgestell ist die Auflage für einen Behälter angeordnet. Insbesondere kann diese Auflage als Tragstern ausgeführt sein, der beispielsweise aus drei rechteckigen Rohren besteht. Daran können Schnellbefestigungen bzw. ein modulares Befestigungssystem angeordnet sein, um einen einfachen und schnellen Wechsel unterschiedlicher Behälter zu ermöglichen. Der Behälter kann beispielsweise ein Transportkorb sein, der mit einem normierten Befestigungssystem, beispielsweise mit dem "Isofix"-System, versehen ist. In diesem Fall lassen sich Autokindersitze im Behälter nutzen. Weiterhin können Kisten, Körbe oder Schalen als Behälter zur Befestigung auf dem Tragstern vorgesehen werden.

Für die Lenkung existieren zwei Achsen, nämlich zum Ersten die Rotationsachse des Lenkers und zum Zweiten die Rotationsachse des Drehgestells. Dabei ist zwischen der Drehachse des Lenkers und der Drehachse des Drehgestells ein Lenkgetriebe zur Übersetzung der Drehbewegung angeordnet, beispielsweise in Form einer beidseitig drehbar angeschlossenen Stange, die parallel zur Längsausrichtung des Fahrradgestells verlaufen kann.

Die Drehschemellenkung ermöglicht, dass der Behälter sich beim Lenken mitdreht. Dadurch ergibt sich eine geringe Gesamtbreite des Fahrrades bei einem großen Behältervolumen, da die Räder immer parallel zum Behälter laufen und nicht gegenüber dem Behälter geschwenkt werden. So sind ein verhältnismäßig großer Lenkwinkel im Bereich von 30° und damit ein sehr kleiner Wendekreis bei einer kleinen Spurbreite und einer kurzen Baulänge realisierbar. Der Lenkwinkel ist deutlich größer als bei zweispurigen Rädern mit einer Achsstummellenkung, die gewöhnlich bei dreirädrigen Lastfahrrädern eingesetzt wird. Insbesondere beträgt die Gesamtbreite nicht mehr als 80 cm, um den Transport durch eine normgerechte Tür zu ermöglichen.

Gegenüber herkömmlichen Lastenfahrrädern, bei denen kein Getriebe vorhanden ist, sondern der Griff bzw. der Lenker mit der gesamten Kiste um die alleinige Drehachse geschwenkt werden muss, ist der Bedienkomfort deutlich erhöht. Zum Lenken ist wie bei gewöhnlichen Fahrrädern eine Rotationsbewegung des Lenkers möglich.

Eine umständliche Schwenkbewegung des Lenkers, wie beim herkömmlichen Lastenrad, ist nicht notwendig.

In einer Ausgestaltung der Erfindung ist die Drehachse des Drehgestells, die auch als Lenkachse bezeichnet wird, in Bezug auf eine Fahrtrichtung eines Fahrrades, das das Fahrgestell aufweist, nach hinten geneigt.

Das heißt mit anderen Worten, dass ein Nachlaufwinkel vorhanden ist. Dieser realisiert ein Rückstellmoment, das bei einer Lenkbewegung dieser entgegengesetzt wirkt, und somit hilft, nach Lenkeinschlag wieder in den Geradeauslauf zu gelangen.

Die Neigung der Drehachse des Drehgestells liegt insbesondere im Bereich von 10° im Bezug zur Vertikalen und kann durch einen Knick oder eine Biegung im Hauptrohr des Fahrgestells realisiert sein. Dadurch ergibt sich eine optimale Anpassung der Geometrie der Rohrkonstruktion an die Geometrie des darauf angeordneten Behälters und es sind große Behälter sowie eine mechanisch unkomplizierte Vorderachskonstruktion möglich. Des Weiteren wird durch den schrägen Behälterboden eine automatische Verlagerung von Transportgut in Richtung des Schwerpunktes des Fahrrades begünstig, was in einer geringen Schwingungsneigung resultiert.

Ein Knick im Hauptrohr des Fahrgestells kann durch eine Schweißverbindung winklig zueinander verlaufender Rohrelemente realisiert sein. Alternativ ist eine Biegung des Rohres möglich. In diesem Fall ist keine Schweißverbindung nötig.

Bei Transformation des Fahrgestells in ein dreidimensionales Koordinatensystem sei die x-Achse entlang der Fahrtrichtung eines das Fahrgestell aufweisenden Fahrrades definiert. Die y-Achse sei quer zur Fahrtrichtung definiert und die z-Achse sei als Höhe des Fahrgestells definiert. Somit verläuft die Drehachse des Drehgestells in x-z-Ebene und ist in Bezug zur x-y-Ebene nach hinten geneigt.

Der sich ergebende Vorteil ist ein stabilisierter und damit sicherer Geradeauslauf.

In einer vorteilhaften Ausgestaltung weist das Fahrgestell ein Parallelogrammgetriebe auf, welches die Vorderradaufnahmeeinrichtungen mechanisch miteinander koppelt, so dass eine Neigungsbewegung einer ersten Vorderradaufnahmeeinrichtung auf die andere Vorderradaufnahmeeinrichtung übertragbar ist. Diese führt somit im Wesentlichen und vorzugsweise genau die gleiche Neigungsbewegung wie die erste Vorderradaufnahmeeinrichtung aus.

Ein wesentlicher Vorteil ist, dass durch die Neigetechnik das Lastenfahrrad bei der Kurvenfahrt seitlich neigbar ist, das gegenüber einem nicht so ausgerüsteten dreirädrigen Lastenfahrrad eine bessere Kurvendynamik und damit eine deutlich höhere Kurvengeschwindigkeit ermöglicht. Dabei ist die Gefahr eines Kippens bei starkem Lenkeinschlag verringert.

Mit anderen Worten ermöglicht das Parallelogrammgetriebe das Schrägstellen, bzw. die Neigung des Lastenfahrades aus einer geraden Position heraus, die der x-z-Ebene entspricht. Die Parallelogrammstruktur dient dabei der mechanischen Kopplung der Vorderachsen zur Gewährleistung einer parallelen Neigung.

Zusätzlich kann sich eine Neigung durch Lenken bei einer etwaig schräg gestellten Drehachse des Drehgestells ergeben. Diese kann durch die mittels des Parallelogrammgetriebes realisierte Neigetechnik ausgeglichen werden. Es ist folglich mittels des Parallelogrammgetriebes eine Neigung ausgleichbar, die durch eine nach hinten geneigte Drehachse des Drehgestells beim Lenken erzeugt wird.

Insbesondere umfasst das Parallelogrammgetriebe eine Basisstange, eine Schwinge sowie zwei Koppeln, wobei die Basisstange und die Schwinge parallel angeordnet sind sowie die Koppeln parallel angeordnet sind. Die Basisstange ist mit dem Fahrgestell, insbesondere mit dem Drehgestell mechanisch verbunden. Die Schwinge ist dabei insbesondere an der dem Behälter gegenüberliegenden Seite der Basisstange, also der Unterseite, angeordnet und drehgelenkig mit den Koppeln verbunden, die wiederum drehgelenkig an die Basisstange angeschlossen sind. Die Vorderradaufnahmeeinrichtungen sind an den rechts und links außenliegenden Koppeln angeordnet.

Mit dem Parallelogrammgetriebe ist eine Neigung in einem Winkel in einer Größenordnung von etwa 10° bis 25°; vorzugsweise 15° bis 22°, insbesondere 20° möglich.

In einer weiteren vorteilhaften Ausgestaltung ist das Parallelogrammgetriebe drehgelenkig an das Drehgelenk auf der dem Behälter gegenüberliegenden Seite angeschlossen. Es sind Vorderradaufnahmeeinrichtungen an Koppeln des Parallelogrammgetriebes ausgebildet. Die mit den Vorderradaufnahmeeinrichtungen ausgebildeten Enden der Koppeln sind dabei außerhalb des Parallelogramms angeordnet und erstrecken sich in Richtung der Seite der Anordnung des Behälters.

Das heißt, dass das Parallelogrammgetriebe mit seiner Basisstange am Drehgestell angeordnet ist und sich bei Lenkbewegung mitdreht. Es ist insbesondere unter dem Behälter angeordnet. Die Schwinge ist insbesondere an der dem Behälter gegenüberliegenden Seite angeordnet, also unter der Basisstange, wobei nicht auszuschließen ist, dass die Schwinge auch oberhalb der Basisstange angeordnet sein kann. Die neigbaren Koppeln sind nach oben verlängert und ragen aus dem Parallelogramm heraus. An diesen Enden der Kopplung sind die Vorderradaufnahmeeinrichtungen angeordnet. Damit sind die Vorderradaufnahmeeinrichtungen oberhalb des Parallelogramms angeordnet.

Bei dieser Ausgestaltung sind die Achsen der Vorderräder nach oben versetzt. So ist es möglich, dass sich der Boden des Lastkorbes nur wenige Zentimeter oberhalb der Vorderradachsen befindet. Dies sorgt für einen niedrigen Schwerpunkt und damit für eine gesteigerte Stabilität sowie für eine einfache Beladung.

Durch diese Lösung ist es möglich, verhältnismäßig große Laufräder von beispielsweise 24 Zoll einzusetzen. Dies bedingt gute Fahreigenschaften, da die Überwindung von kleinen Hindernissen, Schwellen oder Bordsteinkanten einfach möglich ist.

In einer weiteren vorteilhaften Ausgestaltung umfasst das Fahrgestell wenigstens ein Federelement, welches dazu ausgestaltet ist, in einem geneigten Zustand der Vorderradaufnahmeeinrichtungen eine der Neigung entgegenwirkende Kraft zur Rückstellung zu realisieren.

Es wird mit anderen Worten ein Federelement bereitgestellt, das geeignet ist, eine Kraft entgegen der Neigung und in Richtung der x-z-Ebene zu realisieren, die auch als Rückstellkraft bezeichnet wird.

Eins solches Federelement ist insbesondere an beiden Endbereichen der Basisstange zwischen Basisstange und Koppeln angeordnet und wirkt der Neigung der Koppeln gegenüber der Basisstange und somit der Bewegung der daran angeordneten Vorderradaufnahmeeinrichtungen entgegen. Es kann dabei an in Richtung des Behälters, zwischen Basisstange und Verlängerung der Koppel, oder in Richtung der Schwinge, zwischen Basisstange und Koppel, oder beidseitig der Basisstange angeordnet sein.

Als Federelement können beispielsweise eine Luftfeder, eine Druck- und/ oder Zugfeder, beispielsweise Spiralfeder, oder ein elastisches Element angeordnet werden. Auch die Kombination zweier oder mehrerer Elemente ist möglich.

Insbesondere kann das Federelement eine progressive Kennlinie aufweisen. Das heißt, dass die der Neigung entgegengesetzte Kraft mit dem Betrag der Neigung steigt, so dass eine geringe Neigung eine geringe Rückstellkraft erzeugt, und eine große Neigung eine große Rückstellkraft erzeugt. Dies hat den Vorteil, dass die aufrechte Position des Fahrgestells und damit des Fahrrades stabilisiert wird.

Im Bereich von kleinen Neigewinkeln, beispielsweise +/- 3° um die vertikale Ausrichtung, sollte die Rückstellkraft nahezu null sein und hin zu größeren Neigewinkeln stetig zunehmen. Kurz vor Erreichen der rechten bzw. der linken Endlage, die durch das Ende des Schwenkbereiches der Koppeln definiert ist, muss die Kraft steil ansteigen und so die Bewegung zum Stoppen bringen. Zur Sicherheit kann hier auch noch ein elastischer Endanschlag zum Einsatz kommen.

Dadurch ergeben sich eine stabile aufrechte Position des Fahrrades sowie die Fähigkeit, auch im beladenen Zustand zuverlässig von selbst aufrecht stehen zu bleiben. Dies erleichtert das Be- und Entladen wesentlich.

In einer weiteren vorteilhaften Ausgestaltung ist das Federelement ein elastisch verformbares Element, welches vorzugsweise im Wesentlichen kreiszylinderförmig ist. Dieses ist in einem Winkel zwischen einer Basisstange des Parallelogrammgetriebes und einer Koppel des Parallelogrammgetriebes angeordnet.

Bei Neigung kommt es zu einer Winkelverringerung und dadurch zu einer elastischen Verformung des Federelements.

Die Federelemente sind insbesondere in Richtung des Behälters, zwischen Basisstange und Verlängerung der Koppel, oder in Richtung der Schwinge, zwischen Basisstange und Koppel, oder beidseitig der Basisstange angeordnet, so dass sie als beispielsweise gummielastische Anschläge für die Koppel, an denen die Achsen der Räder angeordnet sind, dienen kann. Auch ist möglich, dass an beiden Seiten der Basisstange unterschiedliche Elemente verwendet werden, zum Beispiel in Richtung des Behälters ein verhältnismäßig weiches Element für eine gummielastische Federung und in Richtung der Schwinge ein härteres Element, dass durch seine beispielsweise leicht nach innen versetzte Anordnung erst bei größeren Neigewinkeln aktiviert wird und gleichzeitig als Endanschlag dienen kann.

Das Federelement ist insbesondere kreiszylinderförmig, kann aber auch quaderförmig oder beliebig anders geformt sein. Es kann eine Aussparung im Inneren aufweisen, die vorzugsweise an die äußere Form angepasst ist. Bei einem kreiszylinderförmigen Federelement ist dies beispielsweise eine kreiszylinderförmige Aussparung, so dass sich ein hülsenförmiges Federelement ergibt. Dies resultiert in einer zweistufigen Wirkung und progressiven Kennlinie. Bei der Verwendung eines kreiszylinderförmigen Federelements mit innenliegender Aussparung ergibt sich die gewünschte progressive Kennlinie durch die Kombination zweier verschiedener Deformationsmechanismen. In der ersten Phase, bei kleineren Neigewinkeln, verformt sich der Hohlkörper so lange, bis er vollständig flachgedrückt ist. Die Innenflächen der kreiszylinderförmigen Aussparung liegen nun aneinander. In der zweiten Phase, die durch größere Neigewinkel hervorgerufen wird, verhält sich das Federelement wie ein Festkörper und ist damit wesentlich steifer. Die Form des Federelementes sollte an die konstruktiven Details sowie an die Erfordernisse der Federkennlinie angepasst werden.

Das Federelement kann auch als Anschlag zur Begrenzung der Neigung dienen. In einer typischen Ausführungsform hat das Federelement einen Durchmesser von 20-30 mm und einer Länge von 10-25 mm mit einer Innenbohrung von 8-10 mm Durchmesser. Es besteht aus Polymer und hat eine Shore-A-Härte zwischen 70 und 90. Beim Einsatz massiver Federelemente, also ohne innenliegende Aussparung, kann die Härte entsprechend reduziert werden.

Zusätzlich zu den beschriebenen elastisch verformbaren Elementen kann weiterhin ein anderes Federelement, wie zum Beispiel eine Luftfeder, angeordnet sein.

In einer weiteren vorteilhaften Ausgestaltung des Fahrgestells ist wenigstens ein Element zur mechanischen Begrenzung der Neigung im Winkel zwischen einer Basisstange des Parallelogrammgetriebes und einer Koppel des Parallelogrammgetriebes angeordnet.

In diesem Fall ist ein zusätzlicher mechanischer Endanschlag zur Begrenzung der Neigungsbewegung vorhanden. Dieser kann beispielsweise in Kombination mit einem elastischen Element oder einem anderen Federelement die absolute Neigung begrenzen und somit zu einer progressiven Kennlinie der gesamten Neigetechnik beitragen.

Ein weiterer Aspekt der Erfindung ist ein Fahrrad, insbesondere ein Lastenfahrrad, welches ein erfindungsgemäßes Fahrgestell umfasst.

In einer Ausgestaltung des erfindungsgemäßen Fahrrads umfasst dieses einen elektrischen Antrieb. Der elektrische Antrieb umfasst dabei vorzugsweise ebenfalls eine wiederaufladbare Batterie.

Die Erfindung ist nicht auf die hier vorgestellten Alternativen beschränkt. Alle beschriebenen Ausführungen und Beispiele können untereinander kombiniert werden.

Die Erfindung wird im Folgenden anhand der in den beiliegenden Zeichnungen dargestellten Ausführungsbeispiele erläutert.

Es zeigen
Fig. 1 eine perspektivische Ansicht eines erfindungsgemäßen Fahrrads,
Fig. 2 eine Draufsicht eines erfindungsgemäßen Fahrrads während des Lenkens,
Fig. 3 eine Vorderansicht eines erfindungsgemäßen Fahrrads im geneigten Zustand,
Fig. 4 eine Seitenansicht eines erfindungsgemäßen Fahrrads,
Fig. 5 eine Vorderansicht eines Details eines erfindungsgemäßen Fahrgestells,
Fig. 6 eine Vorderansicht eines Details eines erfindungsgemäßen Fahrgestells in einer alternativen Ausgestaltung, sowie
Fig. 7 eine Vorderansicht eines Parallelogrammgetriebes eines erfindungsgemäßen Fahrgestells.

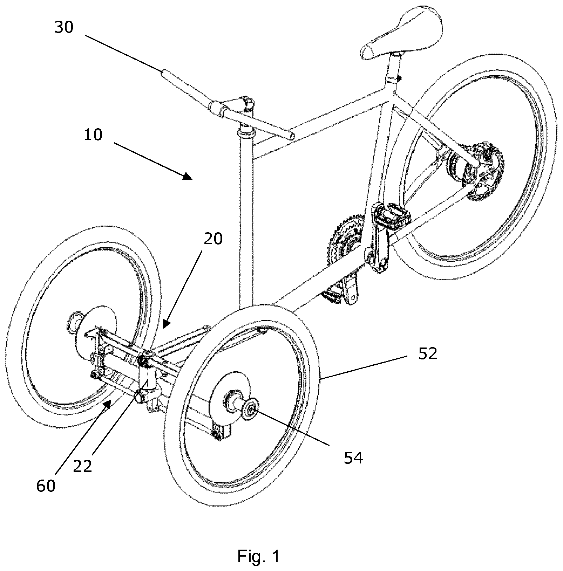

Figur 1 zeigt eine perspektivische Ansicht eines Fahrrads mit erfindungsgemäß ausgestaltetem Fahrgestell 10. Es handelt sich um ein dreirädriges Lastenfahrrad mit Neigetechnik, dessen Behälter 40 zur Lastaufnahme zur Verdeutlichung hier nicht dargestellt ist.

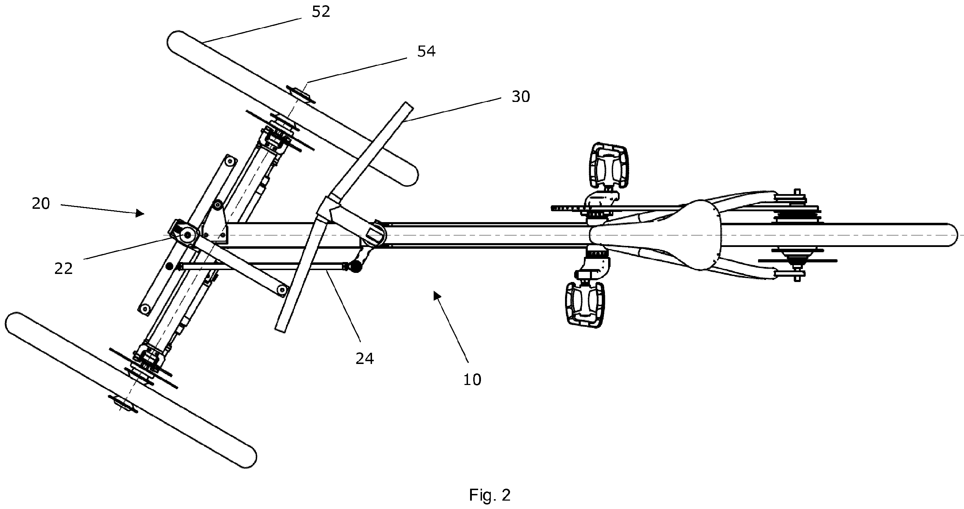

Um die Drehachse 22 des Drehgestells 20, auch als Lenkachse bezeichnet, ist das Drehgestell 20 drehbar gelagert, an dem die Vorderräder 52 angeordnet sind. Es kann mit dem Lenker 30 über ein Lenkgetriebe (vgl. Fig. 2) verdreht werden. Die Achsen 54 der beiden Vorderräder 52 liegen auf einer Geraden. Zwischen den Vorderrädern kann der Behälter 40 angeordnet werden. Durch die drehbare Befestigung des Behälters 40 auf dem Drehgestell 20 zwischen den Vorderrädern 52 kann der Behälter großvolumig ausgestaltet werden, da beim Lenken keine Relativbewegung zwischen Behälter 40 und Vorderrädern 52 erfolgt und somit am Behälter 40 keine Aussparungen für die Vorderräder 52 vorzusehen sind.

Ein Parallelogrammgetriebe 60 verbindet die beiden Vorderradaufnahmeeinrichtungen 50 und ermöglicht so eine parallele Ausrichtung der Vorderräder 52 während des Neigevorgangs. Das Fahrrad umfasst weiterhin ein Hinterrad, einen Antrieb mit Antriebskette, Pedalen, und einem Sattel.

Figur 2 zeigt eine Draufsicht eines erfindungsgemäßen Fahrrads während des Lenkens. Das Lenkgetriebe 24, hier aufweisend eine parallel zum Hauptrohr des Rahmens angeordnete Lenkstange, verbindet die Achse des Lenkers 30 mit der Drehachse 22 des Drehgestells 20 und überträgt somit die Lenkbewegung des Lenkers 30 auf das Drehgestell sowie auf die daran angeordneten Vorderräder 52, deren Achsen 54 auf einer gemeinsamen Geraden liegen. Eine Rotationsbewegung des Lenkers 30 ermöglicht somit den Lenkvorgang.

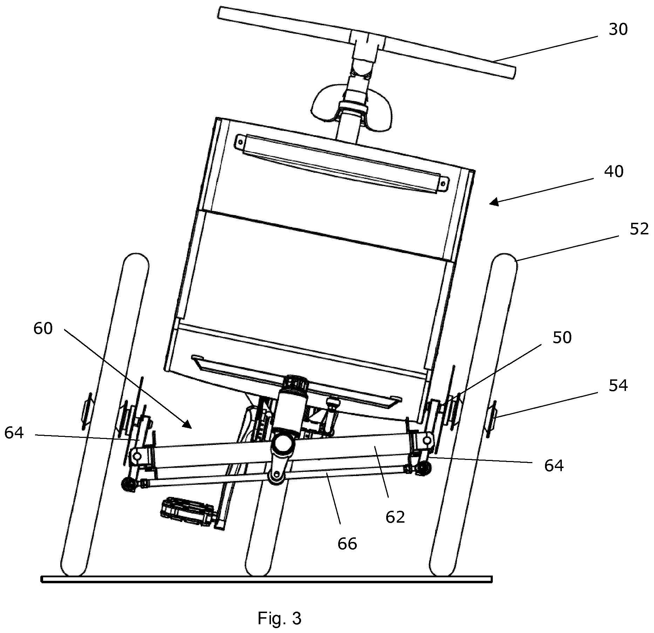

Figur 3 zeigt eine Vorderansicht eines erfindungsgemäßen Fahrrads in geneigtem Zustand. Das Parallelogrammgetriebe 60 ist am Drehgestell 20 fixiert. Die Basisstange 62 des Parallelogrammgetriebes 60 ist gelenkig mit den Koppeln 64 verbunden, an denen die Vorderradaufnahmeeinrichtungen 50 angeordnet sind. Es ist ersichtlich, dass die Vorderradaufnahmeeinrichtungen 50 außerhalb des Parallelogramms, nämlich an den oberen Enden der Koppeln 64, angeordnet sind. Den unteren Abschluss des Parallelogrammgetriebes 60 bildet die gelenkig an den Koppeln 64 gelagerte Schwinge 66, die sich während des Neigens parallel zur Basisstange 62 bewegt. Es wird deutlich, dass die Achsen 54 der Vorderräder 52 nur in der Draufsicht, bezüglich der Lenkbewegung, auf einer gemeinsamen Geraden liegen. In der Vorderansicht ist ersichtlich, dass die Achsen 54 der Vorderräder 52 beim Neigen des Fahrrades in Bezug zum Fahrgestell 10 einzeln geneigt werden. Dies ist notwendig, um den Neigungsvorgang zu ermöglichen.

Es ist weiterhin ersichtlich, dass der Behälter 40, bedingt durch die Anordnung des Parallelogrammgetriebes 60, groß ausgeführt werden kann: Aufgrund seiner zu den Vorderrädern 52 parallelen Neigung muss er auch für den Neigevorgang keine Aussparungen für die Vorderräder 52 aufweisen.

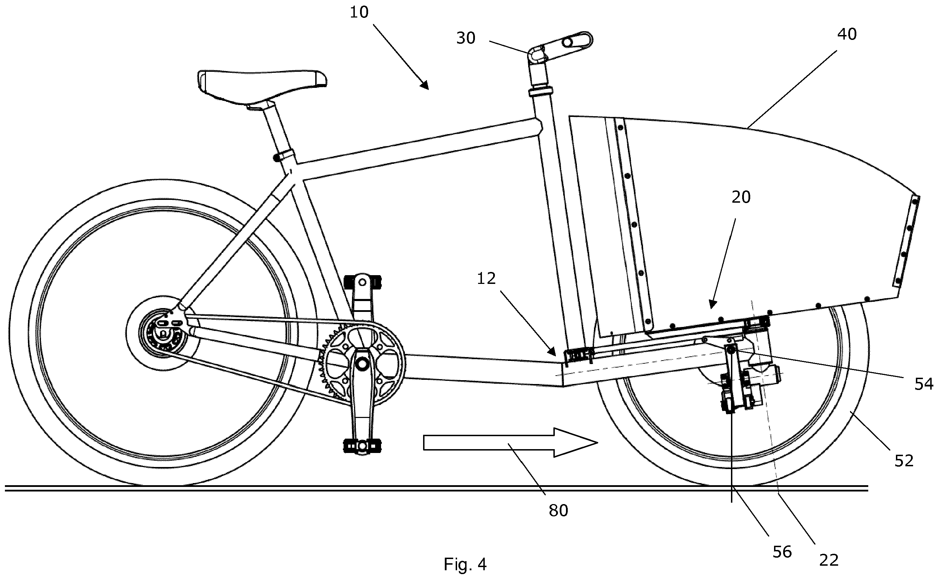

Figur 4 zeigt eine Seitenansicht eines erfindungsgemäßen Fahrrads mit dargestellter Fahrtrichtung 80. Es ist ersichtlich, dass die Achse 54 des Vorderrads 52, und damit der Aufstandspunkt des Vorderrads 56, in Fahrtrichtung hinter der Drehachse 22 des Drehgestells 20 liegen. Dies ergibt eine sogenannte Nachlaufstrecke. Dadurch bedingt ergibt sich bei Lenkbewegung ein Rückstellmoment, das dieser entgegenwirkt und die Vorderräder 52 wieder in Richtung der Geradeausstellung zurückbewegt.

Weiterhin ist ersichtlich, dass die Drehachse 22 des Drehgestells 20 nach hinten geneigt ist. Dies bedingt einen Nachlaufwinkel, der bei einer Lenkbewegung ebenfalls ein Rückstellmoment erzeugt. Weiterhin ist erkennbar, dass das Hauptrohr des Fahrgestells einen Knick 12 aufweist. In der dargestellten Ausführungsform ist dies durch eine Schweißnaht unterhalb des Lenkers 30 realisiert. Eine alternative Ausführungsform könnte mit einem gebogenen Hauptrohr realisiert werden. In beiden Fällen ist es möglich, das Hauptrohr im vorderen Bereich senkrecht zur nach hinten geneigten Drehachse 22 des Drehgestells 20 auszuführen. Dadurch bedingt ist auch ein besonders großes Volumen des Behälters 40 möglich. Dieser ist, wie dargestellt und dem Hauptrohr folgend, ebenfalls leicht schräg angeordnet.

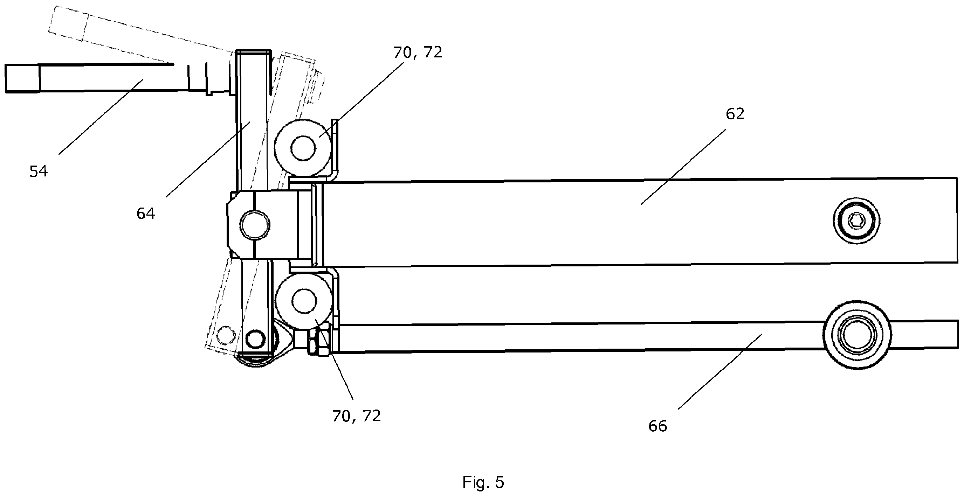

Figur 5 zeigt einen Teil des Parallelogrammgetriebes 60 in einer vergrößerten Detailansicht. Dargestellt sind die Basisstange 62, die darunterliegende Schwinge 66 und eine Koppel 64, welche Basisstange 62 und Schwinge 66 drehgelenkig verbindet. Oberhalb und damit außerhalb des Parallelogramms angeordnet, findet sich an der linken Seite die Achse 54 des Vorderrads 52. Gestrichelt dargestellt ist eine mögliche Auslenkung der Koppel 64, und damit der Achse 54 des Vorderrads 52 bei Neigung des Fahrrades. Dies zeigt einen geneigten Zustand des Rades, beispielsweise bei Kurvenfahrt. Weiterhin dargestellt sind Federelemente 70, die hier als elastisch verformbare Elemente 72 ausgebildet sind. Diese befinden sich in den Winkeln zwischen Basisstange 62 und Koppel 64 und sind sowohl oberals auch unterhalb der Basisstange 62 angeordnet. Die dargestellten elastisch verformbaren Elemente 72 sind hülsenförmig ausgeführt, was eine progressive Kennlinie der Federung ermöglicht. Dabei wird in einem ersten, weicheren Federbereich die Hülse flachgedrückt, bis die Innenflächen aneinander liegen. Wird anschließend die Neigung weiter verstärkt, verhält sich das elastisch verformbare Element 72 wie ein Festkörper und ist somit steifer.

Es ist auch denkbar, die elastisch verformbaren Elemente 72 in einer alternativen Ausgestaltung gedreht gegenüber der Darstellung einzusetzen, so dass die Achse der Hülse beispielsweise senkrecht zum Boden steht.

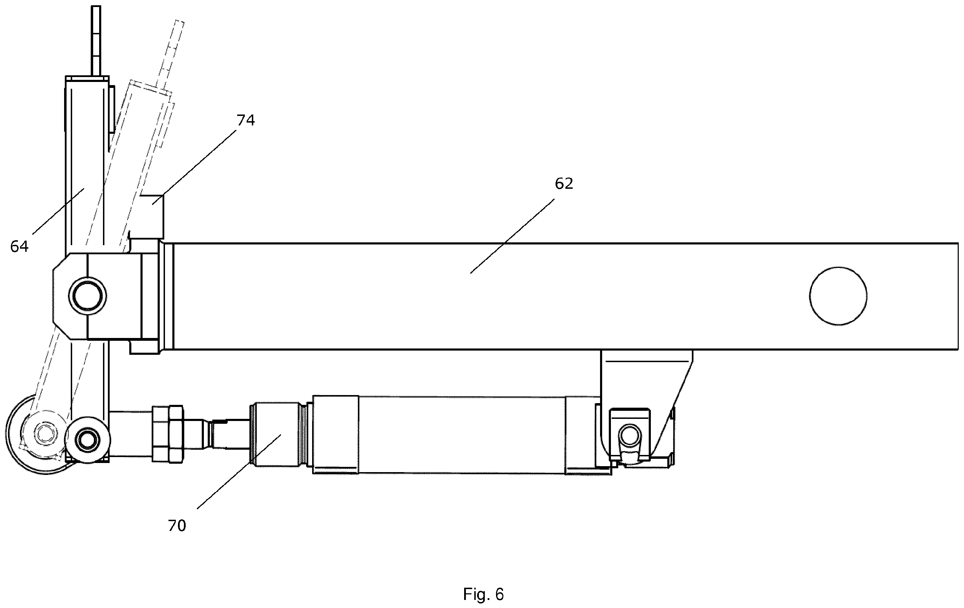

Figur 6 zeigt eine Vorderansicht eines Teiles einer erfindungsgemäßen Parallelogrammstruktur in einer alternativen Ausführungsform. Hier ist als Federelement 70 eine Luftfeder angeordnet, die die Basisstange 62 mechanisch und federnd mit der Koppel 64 verbindet. Auch hier ist in gestrichelter Darstellung die Auslenkung der Koppel 64 bei Neigung des Fahrrades dargestellt. Oberhalb der Basisstange 62, im Winkel zwischen dieser und der Koppel 64, ein Begrenzungselement 74 dargestellt. Dieses ist aus steiferem Material und dient als Endanschlag für die Neigungsbewegung. Es ist nicht ausgeschlossen, dass die in den Figuren 5 und 6 dargestellten Ausführungen miteinander kombiniert sind.

Die Schwinge 66, welche mittels der Koppeln 64 an die Basisstange 62 gekoppelt ist, um das Parallelogrammgetriebe 60 auszubilden, ist in dieser Ansicht nicht dargestellt.

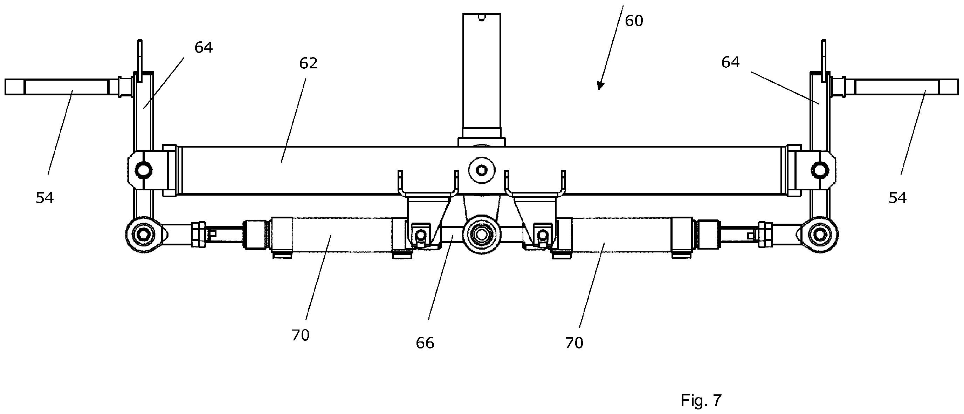

Figur 7 zeigt eine Vorderansicht eines Parallelogrammgetriebes 60 eines erfindungsgemäßen Fahrgestells 10. Die Basisstange 62 ist mittels der Koppeln 64 mechanisch mit der darunter liegenden Schwinge 66 verbunden. An den Koppeln 64, oberhalb und damit außerhalb des Parallelogramms, sind die Achsen 54 der Vorderräder 52 rechts und links angeordnet. Des Weiteren sind in symmetrischer Darstellung rechts und links Federelemente 70, ausgeführt als Luftfedern, dargestellt.

**Bezugszeichenliste**

| | |
|---|---|
| Fahrgestell | 10 |
| Knick im Hauptrohr | 12 |
| Drehgestell | 20 |
| Drehachse des Drehgestells | 22 |
| Lenkgetriebe | 24 |
| Lenker | 30 |
| Behälter | 40 |
| Vorderradaufnahmeeinrichtungen | 50 |
| Vorderrad | 52 |
| Achse des Vorderrades | 54 |
| Aufstandspunkt des Vorderrades | 56 |
| Parallelogrammgetriebe | 60 |
| Basisstange | 62 |
| Koppel | 64 |
| Schwinge | 66 |
| Federelement | 70 |
| elastisch verformbares Element | 72 |
| Begrenzungselement | 74 |
| Fahrtrichtung | 80 |

## Patentansprüche

1. Fahrgestell (10) für ein dreirädriges Fahrzeug, umfassend ein Drehgelenk und ein daran um eine Drehachse (22) drehbar angeordnetes Drehgestell (20), auf dem ein Behälter (40) angeordnet oder anordbar ist, so dass sich der Behälter (40) bei einer Lenkbewegung mit dem Drehgestell (20) mitdreht, und wobei das Fahrgestell ein Lenkgetriebe (24) aufweist, mit welchem eine Lenkbewegung eines Lenkers (30) auf das Drehgestell (20) übertragbar ist, wobei das Fahrgestell wenigstens zwei Vorderradaufnahmeeinrichtungen (50) zur Aufnahme der jeweiligen Achse (54) eines Vorderrades (52) und zur Positionierung der jeweiligen Achse (54) in Bezug zum Fahrgestell aufweist, **dadurch gekennzeichnet, dass** die Drehachse (22) in einer Fahrtrichtung (80) eines Fahrrades, das das Fahrgestell aufweist, vor den Vorderradaufnahmeeinrichtungen (50) verläuft.

2. Fahrgestell (10) nach Anspruch 1, wobei die Drehachse (22) des Drehgestells (20), auch als Lenkachse bezeichnet, in Bezug auf eine Fahrtrichtung (80) eines Fahrrades, das das Fahrgestell aufweist, nach hinten geneigt ist.

3. Fahrgestell (10) nach einem der Ansprüche 1 und 2, wobei das Fahrgestell ein Parallelogrammgetriebe (60) aufweist, welches die Vorderradaufnahmeeinrichtungen (50) mechanisch miteinander koppelt, so dass eine Neigungsbewegung einer ersten Vorderradaufnahmeeinrichtung (50) auf die andere Vorderradaufnahmeeinrichtung (50) übertragbar ist und diese im Wesentlichen die gleiche Neigungsbewegung wie die erste Vorderradaufnahmeeinrichtung (50) ausführt.

4. Fahrgestell (10) nach Anspruch 3, wobei das Parallelogrammgetriebe (60) drehgelenkig an das Drehgelenk auf der dem Behälter (40) gegenüberliegenden Seite angeschlossen ist, und die Vorderradaufnahmeeinrichtungen (50) an Koppeln (64) des Parallelogrammgetriebes (60) ausgebildet sind, wobei sich die mit den Vorderradaufnahmeeinrichtungen (50) ausgebildeten Enden der Koppeln (64) außerhalb des Parallelogramms befinden und in Richtung der Seite der Anordnung des Behälters (40) erstrecken.

5. Fahrgestell (10) nach wenigstens einem der Ansprüche 3 und 4, umfassend wenigstens ein Federelement (70), welches dazu ausgestaltet ist, in einem geneigten Zustand der Vorderradaufnahmeeinrichtungen (50) eine der Neigung entgegenwirkende Kraft zu realisieren.

6. Fahrgestell (10) nach Anspruch 5, wobei das Federelement (70) ein elastisch verformbares Element (72) ist, vorzugsweise im Wesentlichen kreiszylinderförmig ausgestaltet, und in einem Winkel zwischen einer Basisstange (62) des Parallelogrammgetriebes (60) und einer Koppel (64) des Parallelogrammgetriebes (60) angeordnet ist.

7. Fahrgestell (10) nach wenigstens einem der Ansprüche 3-6, wobei wenigstens ein Element zur mechanischen Begrenzung (74) der Neigung im Winkel zwischen einer Basisstange (62) des Parallelogrammgetriebes (60) und einer Koppel (64) des Parallelogrammgetriebes (60) angeordnet ist.

8. Dreirädriges Fahrzeug, insbesondere Lastenfahrrad, umfassend ein Fahrgestell (10) gemäß wenigstens einem der Ansprüche 1-7.

9. Dreirädriges Fahrzeug nach Anspruch 8, umfassend einen elektrischen Antrieb.

## Claims

1. A chassis (10) for a three-wheeled vehicle, comprising a pivot joint and a rotating frame (20) which is rotatable about a rotational axis (22) arranged thereon, on which rotating frame a container (40) is or is arrangeable, such that the container (40) also rotates with the rotating frame (20) during a steering movement, and wherein the chassis has a steering gear (24), with which a steering movement of the handlebars (30) is transferable to the rotating frame (20),
wherein the chassis has at least two front wheel holding devices (50) for holding the respective axle (54) of a front wheel (52) and for positioning the respective axle (54) with respect to the chassis,
**characterised in that**
the rotational axis (22) runs in a direction of travel (80) of a bicycle which has the chassis in front of the front wheel holding devices (50).

2. The chassis (10)
according to Claim 1, wherein the rotational axis (22) of the rotating frame (20), also referred to as the steering axle, is tilted backwards with respect to a direction of travel (80) of a bicycle which has the chassis.

3. The chassis (10) according to any one of Claims 1 and 2, wherein the chassis has a parallelogram gear (60) which couples the front wheel holding devices (50) mechanically to one another such that a tilting movement of a first front wheel holding device (50) is transferrable to the other front wheel holding device (50) and this substantially executes the same tilting movement as the first front wheel holding device (50).

4. The chassis (10) according to Claim 3, wherein the parallelogram gear (60) is pivotably connected to the pivot joint on the side opposite the container (40), and the front wheel holding devices (50) are formed on couplers (64) of the parallelogram gear (60), wherein ends of the couplers (64) formed with the front wheel holding devices (50) are located outside the parallelogram and extend in the direction of the side of the arrangement of the container (40).

5. The chassis (10) according to at least one of Claims 3 and 4, comprising at least one spring element (70) which is configured to realise a force which counteracts the tilting in a tilted condition of the front wheel holding devices (50).

6. The chassis (10) according to Claim 5, wherein the spring element (70) is an elastically deformable element (72), preferably configured substantially in a circular cylindrical shape, and is arranged at an angle between a base rod (62) of the parallelogram gear (60) and a coupler (64) of the parallelogram gear (60).

7. The chassis (10) according to at least one of Claims 3-6, wherein at least one element for mechanically limiting (74) the tilting is arranged in the angle between a base rod (62) of the parallelogram gear (60) and a coupler (64) of the parallelogram gear (60).

8. A three-wheeled vehicle, in particular a cargo bicycle, comprising a chassis (10) according to at least one of Claims 1-7.

9. The three-wheeled vehicle according to Claim 8, comprising an electric drive.

## Revendications

1. Châssis (10) pour un véhicule à trois roues, comprenant un pivot et un bogie (20) agencé de manière rotative autour d'un axe de rotation (22) sur celui-ci, sur lequel un contenant (40) est agencé ou peut être agencé, de telle sorte que le contenant (40) tourne avec le bogie (20) lors d'un mouvement de direction, le châssis présentant un mécanisme de direction (24), avec lequel un mouvement de direction d'un guidon (30) peut être transféré au bogie (20), le châssis présentant au moins deux dispositifs de réception des roues avants (50) pour la réception de l'axe respectif (54) d'une roue avant (52) et pour le positionnement de l'axe respectif (54) par rapport au châssis,
**caractérisé en ce que**
l'axe de rotation (22) passe avant les dispositifs de réception des roues avants (50) dans une direction de déplacement (80) d'une bicyclette que le châssis présente.

2. Châssis (10)
selon la revendication 1, dans lequel l'axe de rotation (22) du bogie (20),
également nommé axe de direction, est incliné vers l'arrière par rapport à une direction de déplacement (80) d'une bicyclette que le châssis présente.

3. Châssis (10) selon l'une quelconque des revendications 1 et 2, dans lequel le châssis présente une transmission par parallélogramme (60), qui couple mécaniquement les dispositifs de réception des roues avants (50) l'un avec l'autre, de telle sorte qu'un mouvement d'inclinaison d'un premier dispositif de réception des roues avants (50) puisse être transféré à l'autre dispositif de réception des roues avants (50), et que celui-ci réalise essentiellement le même mouvement d'inclinaison que le premier dispositif de réception des roues avants (50).

4. Châssis (10) selon la revendication 3, dans lequel la transmission par parallélogramme (60) est raccordée de manière pivotante au pivot sur le côté opposé au contenant (40), et les dispositifs de réception des roues avants (50) sont configurés sur des bielles (64) de la transmission par parallélogramme (60), les extrémités des bielles (64) configurées avec les dispositifs de réception des roues avants (50) se trouvant à l'extérieur du parallélogramme et s'étendant dans la direction du côté de l'agencement du contenant (40).

5. Châssis (10) selon au moins l'une quelconque des revendications 3 et 4, comprenant au moins un élément ressort (70), qui est conçu pour réaliser une force opposée à l'inclinaison à un état incliné des dispositifs de réception des roues avants (50).

6. Châssis (10) selon la revendication 5, dans lequel l'élément ressort (70) est un élément déformable élastiquement (72), de préférence conçu essentiellement en forme cylindrique circulaire, et est agencé dans un angle entre une tringle de base (62) de la transmission par parallélogramme (60) et une bielle (64) de la transmission par parallélogramme (60).

7. Châssis (10) selon au moins l'une quelconque des revendications 3- 6, dans lequel au moins un élément pour la limitation mécanique (74) de l'inclinaison est agencé dans l'angle entre une tringle de base (62) de la transmission par parallélogramme (60) et une bielle (64) de la transmission par parallélogramme (60).

8. Véhicule à trois roues, notamment bicyclette de transport, comprenant un châssis (10) selon au moins l'une quelconque des revendications 1- 7.

9. Véhicule à trois roues selon la revendication 8, comprenant un entraînement électrique.
